# EUROPÄISCHE PATENTSCHRIFT

(11) **EP 2 313 765 B1**
(45) Veröffentlichungstag und Bekanntmachung des Hinweises auf die Patenterteilung: **03.07.2013**
(21) Anmeldenummer: 09780944.6
(22) Anmeldetag: 22.07.2009
(51) Int. Cl.: G01N 27/64

(54) **VERFAHREN UND VORRICHTUNG ZUR IONISIERUNG SOWIE DAMIT VERSEHENE GASDETEKTIONSVORRICHTUNG**
METHOD AND APPARATUS FOR IONIZING AND GAS DETECTION APPARATUS PROVIDED THEREWITH
PROCÉDÉ ET DISPOSITIF D'IONISATION, AINSI QUE DISPOSITIF DE DÉTECTION DE GAZ QUI EN EST POURVU

(30) Priorität: 31.07.2008 DE 102008035773
(43) Veröffentlichungstag der Anmeldung: 27.04.2011
(60) Teilanmeldung: 12166049.2
(73) Patentinhaber: EADS Deutschland GmbH, 85521 Ottobrunn (DE)
(72) Erfinder: MÜLLER, Gerhard, 85567 Grafing (DE); OBERHÜTTINGER, Carola, 81541 München (DE); KRENKOW, Angelika, 81679 München (DE); SPANNHAKE, Jan, 86567 Hilgertshausen-Tandern (DE)
(74) Vertreter: Kastel, Stefan
(86) Internationale Anmeldenummer: PCT/EP2009/059447
(87) Internationale Veröffentlichungsnummer: WO 2010/012642

(56) Entgegenhaltungen:
- EP-A2- 0 795 749
- US-A- 5 184 015
- US-A1- 2007 114 395
- BEGLEY P ET AL: "Photoemissive ionisation source for ion mobility detectors" JOURNAL OF CHROMATOGRAPHY, ELSEVIER SCIENCE PUBLISHERS B.V, NL, Bd. 588, Nr. 1-2, 27. Dezember 1991 (1991-12-27), Seiten 239-249, XP026509018 ISSN: 0021-9673 [gefunden am 1991-12-27]
- WALLS CHRISTOPHER J ET AL: "Real-time monitoring of chlorinated aliphatic compounds in air using ion mobility spectrometry with photoemissive electron sources" PROCEEDINGS OF SPIE - THE INTERNATIONAL SOCIETY FOR OPTICAL ENGINEERING 1999 SOCIETY OF PHOTO-OPTICAL INSTRUMENTATION ENGINEERS, Bd. 3534, 2. November 1998 (1998-11-02), Seiten 290-298, XP7911321

## Beschreibung

Die Erfindung betrifft ein Ionisationsverfahren zur Ionisierung von zu untersuchenden gasförmigen oder dampfförmigen Stoffen sowie eine Ionisationsvorrichtung zur Durchführung eines solchen Verfahrens. Weiter betrifft die Erfindung eine Detektionsvorrichtung zur Dektektion und/oder Identifikation von gasförmigen oder dampfförmigen Stoffen mittels Ionenmobilitätsspektrometrie sowie eine Detektionsvorrichtung zur Durchführung eines solchen Detektionsverfahrens.

lonenmobilitätsspektrometrie ist die derzeit etablierte Referenztechnologie zur Detektion von Explosivstoffen, chemischen Kampfstoffen und unerlaubten Drogen.

Für nähere Einzelheiten zur Ionenmobilitätsspektrometrie sowie zu dem derzeitigen Stand der Technik hierzu wird auf folgenden Literaturstellen verwiesen:
[1] G. A. Eiceman, Z. Karpas: "Ion Mobility Spectrometry"; CRC Press. Boca Rayton, 1994;
[2] C. S. Rese, S. J. Taraszewsky, T. F. Limero: "Near real-time analysis of toxicologically important compounds using the volatile organic analyser for the international space station", in Proceedings of the 8th Int. Conference on IMS, Buxton, U.K., 1999;
[3] J. Stach, "Ionenmobilitätsspektrometrie-Grundlagen und Applikationen", Analytiker Taschenbuch Band 16, Springer, Berlin 1997;
[4] A. Schumann, "Einführung in die lonenmobilitätsspektrometrie (IMS)", Dissertation, Kapitel 3, Gerhard-Mercator-Universität-Duisburg, 2001;
[5] S. Sielemann, "Detektion flüchtiger organischer Verbindungen mittels Ionenmobilitätsspektrometrie und deren Kopplung mit Multi-Kapillar-GasChromatographie", Dissertation, Universität Dortmund, 1999.;
[6] D. M. Lubman, M. N. Kronick: "Resonance- Enhanced Two-Photon lonization Spectroscopy in Plasma Chromatography", Anal. Chem. 55, 1983, 1486-1492; und
[7] V. Matsaev, M. Gumerov, L. Krasnobaev, V. Perhenkov, V. Belyakov, A. Chistyakov, V. Boudovitch: "IMS Spectrometers with Radioactive, X-Ray, UV and Laser lonization", International Journal for Ion Mobility Spectrometry, 5 (2002) 3.

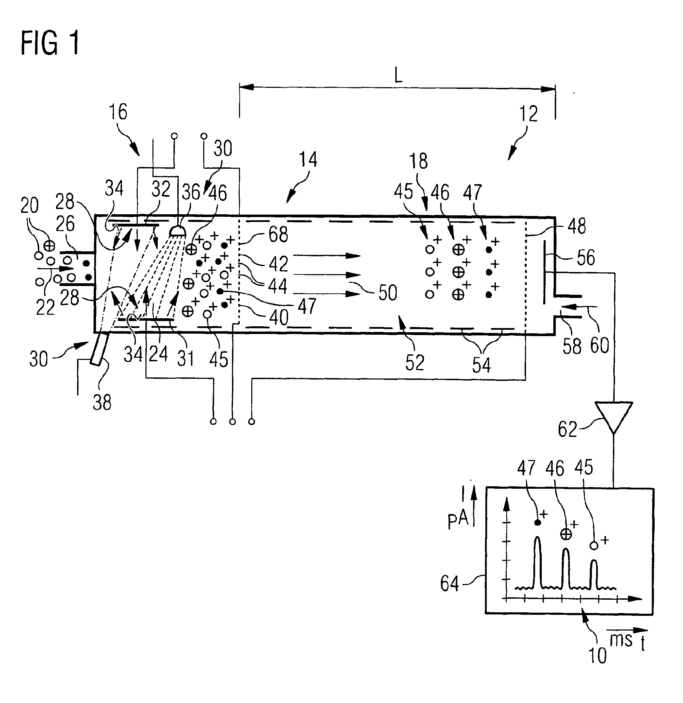

Bei der lonenmobilitätsspektrometrie werden Analyt-Gasmoleküle durch eine Ionenquelle in Analytgasionen transformiert. Die erzeugten Ionen driften dann gegen einen Strom eines neutralen Gases (normalerweise Stickstoff N₂ oder entfeuchtete Luft) aufgrund eines homogenen elektrischen Feldes zu einer Sammelelektrode hin. Mit Hilfe eines Steuergitters werden Ionenpakete periodisch in die Driftzelle eingelassen. Nach Auftreffen auf der Sammelelektrode wird die Ankunftszeit des Ionenpakets detektiert und die Driftzeit ermittelt. Unterschiedliche Analytgasionen werden durch ihr charkteristisches Driftzeitspektrum unterschieden, ähnlich wie dies bei dem lonenmobilitätsspektrum 10 in Fig. 1 dargestellt ist.

### Etablierte Verfahren zur Ionenerzeugung:

Bekannte Spektrometer aus dem Stand der Technik verwenden radioaktive Ionisationsquellen, meist ⁶³Ni-Strahler, die hochenergetische Elektronen (β-Strahlung) mit einer durchschnittlichen Energie von etwa 17keV emittieren. Aufgrund ihrer hohen Elektronenenergie ionisieren ⁶³Ni-Quellen auch Spezien mit hohem lonisationspotential wie z. B. N₂, O₂ und H₂O. Ionen werden deshalb auch in denjenigen Fällen erzeugt, wo keine Analytgasspuren vorhanden sind. Da alle Arten von ionisierten Spezien mit dem verbleibenden Hintergrund neutraler Teilchen wechselwirken können, ist der Ionenformprozess von Natur aus komplex. Eine stark vereinfachte Reaktionssequenz ist in Tabelle 1 wiedergegeben. Tabelle 1 zeigt die Bildung von positiven und negativen Reaktant-Ionenclustern aus einem anfänglichen Ionisationsvorgang mit hochenergetischer β-Strahlung und einem N₂-Molekül. Mögliche Proton- und Elektronaustauschreaktionen mit Analytgasmolekülen sind in der unteren Zeile angegeben. Für nähere Einzelheiten hierzu wird auf die obige Literaturstelle [3] verwiesen.

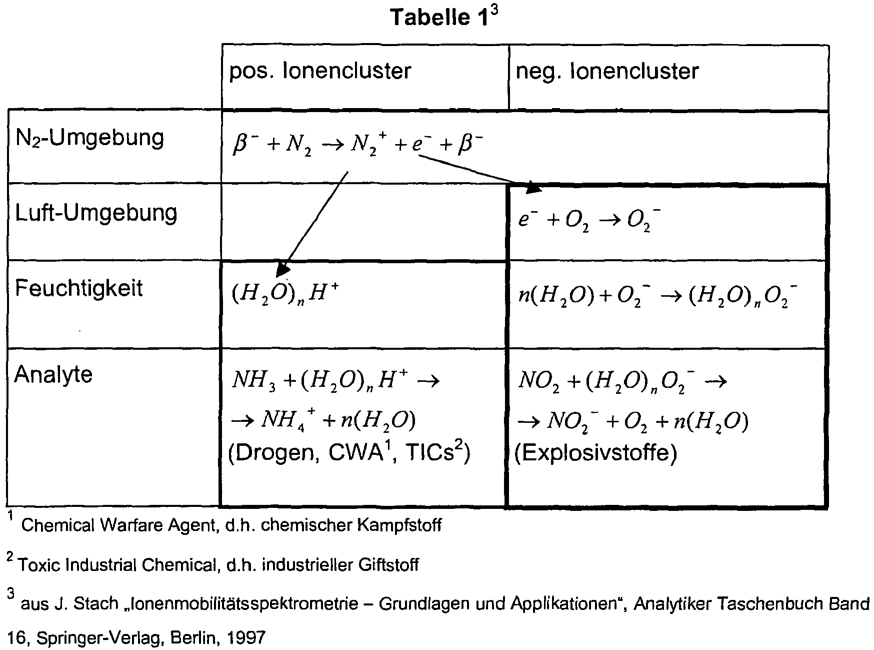

Da bei einer solchen Wechselwirkung die kinetische Energie des anfänglichen Elektrons nur um einen sehr kleinen Betrag verringert wird, dauert dieser primäre Ionisationsprozess an, bis die verbleibende Energie des Elektrons unter die Ionisationsenergie von N₂ (E_{Ion} = 15,6 eV) fällt. Falls, dass der anfängliche lonenerzeugungsprozess unter reiner Stickstoffatmosphäre stattgefunden hat, thermalisieren die emittierten Elektronen (e⁻) und bleiben als freie Elektronen mobil, bis sie mit N₂⁺-Ionen rekombinieren oder bis sie an einer Metallelektrode gesammelt werden. Negative N₂-Ionen können nicht gebildet werden, da neutrale N₂-Moleküle aufgrund ihrer negativen Elektronenaffinität Eₑₐ elektronenabstoßend sind.

In dem Fall, dass der anfängliche Ionisationsvorgang in trockener Luft (- 80% N₂ und - 20% O₂) stattgefunden hat, sind weitere Reaktionen möglich, wie in der zweiten Zeile der Tabelle 1 angegeben. Zunächst werden die freien Elektronen an O₂-Molekülen unter Bildung von O₂⁻-Ionen gefangen. Dies ist möglich, da O₂-Moleküle eine posititve Elektronenaffinität Eₑₐ von 0,448 eV haben, was sie elektronen-anziehend macht.

Wie in der dritten Zeile der Tabelle 1 angegeben, sind weitere Reaktionen möglich, wenn der anfängliche Ionisationsvorgang in feuchter Luft stattgefunden hat. Aufgrund des starken elektrischen Dipolmoments von H₂O werden H₂O-Moleküle durch O₂⁻ -Ionen angezogen, wodurch (H₂O)ₙ O₂-Ionencluster gebildet werden. Die Anzahl n von an O₂-Ionen gefangenen H₂O-Molekülen hängt von der Temperatur der Umgebungsatmosphäre ab und unterliegt auch bei einer festen Temperatur einer beträchtlichen Streuung. Bei einer Feuchtigkeit enthaltenden Atmosphäre können die N₂⁺-Ionen auch sekundären Reaktionen unterworfen sein, wodurch positive H⁺(H₂O)ₙ-Ionencluster gebildet werden. Hier wird die anfängliche Clusterreaktion als das Ergebnis eines Drei-Körper-Kollisionsprozesses angesehen:

*N₂*⁺+3*H*₂*O*→*N₂*+*OH*+*H*⁺(*H*₂*O*)₂.

Abhängig von der Temperatur der umgebenden Atmosphäre können sich weitere H₂O-Moleküle an diesem anfänglich positiven Ionencluster anlagern. Unter feuchter Atmosphäre treten deswegen sowohl positive als auch negative Reaktant-Ionencluster auf. Falls zusätzliche Spuren von Verunreinigungsgasen vorhanden sind, wechselwirken diese ebenfalls mit den Reaktant-Ionenclustern und bilden Analyt-Gasionen, die die gewünschte analytische Information enthalten. Ob positive oder negative Analyt-Ionen geformt werden, hängt von der Protonenaffinität Eₚₐ und/oder der Elektronenaffinität Eₑₐ der Analyt-Gasmoleküle ab. In Tabelle 1 ist ein Beispiel für eine positive Ionenbildung (mittlere Spalte) und ein zweites Beispiel für eine negative Ionenbildung (rechte Spalte) angegeben. Während der erste Prozess die dominierende Detektionsreaktion für toxische industrielle Verbindungen (TIC), Drogen und chemische Kampfstoffe (CWA) bildet, ist der zweite Prozess wichtig für die Detektion von Explosivstoffen.

Wie in der Literaturstelle [3] angegeben, sind mögliche Alternativen zu radioaktiven Ionisationsquellen Korona-Entladungsquellen. Dabei wird ein Luftstrom, der die interessierenden Analyt-Gase enthält, direkt durch eine Plasmaentladung geleitet, wo die Analyte mit den geladenen Bestandteilen des Plasmas wechselwirken können, um Analyt-Gasionen zu bilden. Die Bildung Reaktant-Ionen und Analyt-Ionen folgt grob den selben Wegen wie in Tabelle 1 angegeben. Korona-Entladungsquellen vermeiden die Verwendung von Radioaktivität, aber verbrauchen beträchtliche elektrische Energie zum Erhalten des Plasmas. Unter Verwendung von MEMS-Mikrofabrikationstechnologien können Korona-Quellen klein und robust ausgeführt und mit niedrigen Kosten gefertigt werden.

Sowohl ⁶³Ni-Quellen als auch Korona-Quellen haben das gemeinsame Problem, dass sie potentiell alle Bestandteile des Proben-Luftstromes einschließlich der gesamten Luftbestandteile ionisieren, die nur von geringem oder gar keinem analytischen Interesse sind. Schwache Analyt-Ionen-Peaks können daher unter viel größeren Reaktant-Ionen-Peaks untergehen. Dieses Problem wird noch durch die Tatsache verschärft, dass die Form der Reaktant-Ionen-Peaks sich ändern kann, wenn es Veränderungen in der Feuchtigkeit des Probengases gibt und wenn die Verunreinigungs-Spurengase selbst zu der Bildung von Reaktant-Ionen beitragen.

Wie in der Literaturstelle [3] ausgeführt, kann Photoionisation im Prinzip die Bildung von analytisch irrelevanten Reaktantionen vermeiden. Sowohl Ein-Photonlonisationsprozesse als auch Zwei-Photonen-Ionisationsprozesse sind untersucht worden. Ein-Photon-Ionisation ist unter Verwendung von Gasentladungslampen mit Photonenenergien Eₚₕ von 9,8 eV, 10,6 eV und 11,7 eV möglich, abhängig von der Art der Gasfüllung. Mit diesen relativ geringen Energien bleiben die Hauptbestandteile der Umgebungsluft, d. h. N₂, O₂, H₂O und CO₂ unbeeinflusst, da die Ionisationsenergie I dieser Gase die Photonenenergie Eₚₕ überschreitet: I > Eₚₕ. Wie in
[6] D. M. Lubmann, M. N. Kronick: "Resonance- Enhanced Two-Photon lonization Spectroscopy in Plasma Chromatography", Anal. Chem. 55, 1983, 1486-1492.
   und
[7] V. Matsaev, M. Gumerov, L. Krasnobaev, V. Perhenkov, V. Belyakov, A. Chistyakov, V. Boudovitch: "IMS Spectrometers with Radioactive, X-Ray, UV and Laser lonization", International Jounal for Ion Mobility Spectrometry, 5 (2002) 3
beschrieben, wird durch Verwendung von Zwei-Photon-Laserionisation ein viel größeres Ausmaß an Selektivität erhalten. Bei diesem Prozess werden Photonen von viel geringerer Energie (Eₚₕ~ 4-6 eV) verwendet, um die Analytgase in einen Zwischenelektronenzustand anzuregen, von wo aus die angeregten Moleküle nach Absorption eines zweiten Photons ionisiert werden können. Da dieses Zwischenlevel spezifisch für den jeweiligen Analyten ist, ist die Zwei-Photonen-Ionisation von Natur aus selektiv. Ein Nachteil ist jedoch der hohe Preis, der relativ hohe Energieverbrauch und das große Volumen der gepulsten UV-Laserquellen.

Die US 2007/0114395 A1 beschreibt ein Ionenmobilitätsspektrometer, bei dem die hintere Wand durch eine dünne Metallschicht gebildet wird, in deren Nähe ein zu untersuchendes Messgas eingeleitet wird. Die dünne Metallschicht wird von hinten derart bestrahlt, dass es zu einer inneren Totalreflektion und damit zur Emission von Elektronen kommt.

In der EP 0 795 749 A2 ist ein lonenmobilitätsspektrometer offenbart, bei dem eine Beleuchtungsquelle derart angeordnet ist, dass sie in Gasphase befindliche Moleküle in einem Ionisationsraum ionisieren kann.

US 5 184 015 A offenbart eine Ionisationsvorrichtung, bei der eine Metalloberfläche derart bestrahlt wird, dass Elektronen emittiert werden und nach einem bestimmten Driftweg mit zu der Elektrode hin geleiteten Molekülen zu Ionen rekombinieren.

Aufgabe der Erfindung ist es, ein besonders kosteneffektives radioaktivfreies lonisationsverfahren sowie eine besonders kosteneffektive Ionisationsvorrichtung zur Durchführung eines solchen Ionisationsverfahrens zu schaffen.

Diese Aufgabe wird durch ein Ionisationsverfahren mit den Schritten des Anspruches 1 sowie einer Ionisationsvorrichtung mit den Merkmalen des Anspruches 9 gelöst.

Gemäß einem besonderem Aspekt der vorliegenden Erfindung soll eine möglichst kostengünstige Detektion und Identifikation von Gasen und Dämpfen mit Hilfe von lonenmobilitätsspektrometrie geschaffen werden, bei der radioaktive lonisationsquellen vermieden werden.

Dies wird durch ein Detektionsverfahren gemäß Anspruch 7 sowie eine Detektionsvorrichtung gemäß Anspruch 15 erreicht.

Vorteilhafte Ausgestaltungen der Erfindung sind Gegenstand der Unteransprüche.

Erfindungsgemäß erfolgt die Ionisation der Stoffe über photo-induzierten Elektronentransfer an Festkörperoberflächen.

Dadurch werden radioaktive Ionisationsquellen vermieden. Das lonisationsverfahren sowie die Ionisationsvorrichtung sind vorzugsweise MEMS-tauglich. Die lonisationsvorrichtung kann unter Verwendung von Mikrosystemtechnik gefertigt werden. Dadurch lassen sich Handgeräte und kleine mobile Einheiten erzielen.

Mit der Erfindung ist eine besonders leistungsarme Ionisation erreichbar, so dass besonders energiesparend gearbeitet werden kann.

Weiter sind bei der Detektion von Gasen und Dämpfen unter Verwendung der erfindungsgemäßen Ionisationsvorrichtung bzw. des erfindungsgemäßen lonisationsverfahrens Identifikationen der zu untersuchenden Stoffe wahlweise oder kombiniert über die Photonenenergie und die Driftzeit möglich.

Die vorliegende Erfindung beschreibt eine kosteneffektive Ionisationstechnik, die auf einem Photo-Ionisations-Prozess basiert, der an Festkörperoberflächen auftritt. Die Ionisationsquellen, die auf diesem Detektionsprinzip basieren, können sowohl positive als auch negative Ionen erzeugen und können in der Form von miniaturisierten kostengünstigen MEMS-Vorrichtungen implementiert werden.

Die Erzeugung von positiven oder negativen Ionen kann durch die Verwendung des Festkörpermaterials, an der der Photoionisationsprozess stattfindet, und/oder durch Anlegung von entsprechenden positiven oder negativen Spannungen zwischen der Festkörperoberfläche, die als Elektrode eingesetzt wird, und einer Gegenelektrode gesteuert werden.

Vorzugsweise wird die Energie der erzeugten Photonen selektiv an die jeweils verwendeten Festkörpermaterialien und/oder an die zu untersuchenden Gase angepasst.

Die Erfindung weist eine Festkörperionisationsquelle auf, die aus einem n-dotierten Halbleitermaterial besteht, und weist weiter eine Lichtquelle zur Oberflächenbelichtung auf. Adsorbierte Moleküle werden durch photoneninduzierte Elektronentransferprozesse entweder positiv oder negativ geladen.

Nicht von der Erfindung umfasste Ionisationsquellenmaterialen von besonderem Interesse für die Emission sowohl von positiven als auch negativen Ionen sind Edelmetalle. Besonders geeignet ist

Platin, aber auch Palladium, Iridium, Gold oder andere Edelmetalle sind denkbar und möglich.

Für eine Elektronenemission oder die Bildung von negativen Ionen sind besonders interessante Quellenmaterialien n-dotierte Halbleitermaterialen mit breiten Bandlücken. Hauptsächlich interessant sind hier III-Nitride und Metalloxidmaterialien.

Für eine Erzeugung von positiven Ionen sind besonders interessante, von der Erfindung nicht umfasste Quellenmaterialien p-dotierte Halbleiter mit breiten Bandlücken. Besonders interessant sind III-Nitride und Metalloxidmaterialen sowie p-Typ-Diamant.

Gemäß einer vorteilhaften Ausgestaltung der Erfindung lässt sich die lonisationsquelle, also die beleuchtbare Festkörperoberfläche - beispielsweise mittels einer Heizeinrichtung - erhitzen. Dadurch können elekrostatische Bindungen zwischen den adsorbierten Spezien und der kompensierenden Elektronenladungsverteilung in dem Quellenmaterial aufgebrochen werden. Dies kann besonders einfach und kostengünstig unter Verwendung MEMS-Mikroheizungen realisiert werden.

Gemäß einer weiteren vorteilhaften Ausgestaltung der Erfindung kann das lonisationsquellenmaterial eine Nano-Morphologie aufweisen oder mit Nanostrukturen ausgebildet werden. Beispielsweise ist die Festkörperoberfläche mit NanoDrähten, Nano-Spitzen oder anderen Nano-Strukturen bedeckt. Die Nano-Morphologie und Nano-Strukturen haben den Effekt, dass sich an ihnen, wenn an der Oberfläche eine elektrische Spannung angelegt wird, ein starkes elektrisches Feld ausbildet. Durch die verstärkten lokalen elektrischen Felder an der EmitterOberfläche können die elektrostatischen Bindungen zwischen den geladenen adsorbierten Spezien und der kompensierenden Elektronenladungsverteilung in dem Quellenmaterial aufgebrochen werden.

Besonders bevorzugt wird die Ionisationsvorrichtung in Verbindung mit einer Ionenmobilitätsspektrometer-Driftröhre verwendet. Dadurch entsteht eine besonders kostenkünstige, kompakte und robuste Gasdetektionsvorrichtung auf der Basis der lonenmobilitätsspektrometrie.

Ausführungsbeispiele der Erfindung werden im Folgenden anhand der beigefügten Zeichnung näher erläutert. Darin zeigt:
- Fig. 1: eine schematische Darstellung einer Detektionsvorrichtung zur Detektion von Gasen oder Dämpfen mittels lonenmobilitätsspektrometrie;
- Fig. 2: eine schematische Darstellung des Prinzips der photoinduzierten Elektronenemission an einer Festkörperoberfläche am Beispiel einer photo-induzierten Erzeugung von freien Elektroden an einer nicht erfindungsgemäßen Platin-Elektrode bei Betrieb in Vakuum;
- Fig. 3: eine schematische Darstellung des Prinzips einer Negativ-Ionen-Drift und der Erzeugung von negativen Ionen im Anschluss an eine photoinduzierte Elektronenemission an einer Festkörperoberfläche an einem nicht erfindungsgemäßen Beispiel einer Platinelektrode bei Betrieb in trockener Luft;
- Fig. 4: eine schematische Darstellung eines ersten Prinzips der Oberflächenionisation zur photoinduzierten Emission von positiven Ionen aus einer Festkörperoberfläche am Beispiel der Emission von positiven Ionen aus einer nicht erfindungsgemäßen belichteten Platin-Elektrode;
- Fig. 5: eine schematische Darstellung eines zweiten Prinzips der Oberflächenionisation zur photoinduzierten Emission von positiven Ionen aus einer Festkörperoberfläche am Beispiel der Emission von positiven Ionen aus einer nicht erfindungsgemäßen belichteten Platinelektrode;
- Fig. 6: eine schematische Darstellung des Prinzips der Emission positiver Ionen von schwach an einen Festkörper gebundenen (physikalisch adsorbierten) Adsorbaten, wobei die Festkörperionisationsenergie gegenüber der Vakuumionisationsenergie durch einen Betrag Φₚₜ reduziert ist,
- Fig. 7: eine schematische Darstellung eines Prinzips zur Elektronenemission aus einem n-Typ-Halbleiter;
- Fig. 8: eine schematische Darstellung einer Oberflächenionisation an einer nicht erfindungsgemäßen p-Typ-Halbleiteroberfläche;
- Fig. 9: einen schematischen Graph zum Vergleich unterschiedlicher Materialien für die Festkörperoberfläche;
- Fig. 10: eine Darstellung vergleichbar der von Fig. 9 für weitere Festkörpermaterialien;
- Fig. 11: eine Darstellung vergleichbar derjenigen von Fig. 9 oder Fig. 10 für weitere Festkörpermaterialien;
- Fig. 12: eine schematische Darstellung eines Prinzips der Oberflächenionisation an einem n-Typ-Halbleiter unter Verwendung von optisch induzierten freien Löchern in dem Valenzband;
- Fig. 13a: eine schematische Darstellung einer negativen Ladungsverteilung in einem leitenden Substrat, die induziert wird, wenn ein positives Ion mit der Ladung q aus einer Oberfläche extrahiert wird;
- Fig. 13b: eine schematische Darstellung der elektrostatischen Anziehung eines Analytgasiones durch eine äquivalente Bildladung, was zu der Anziehungskraft F führt;
- Fig. 14: Darstellungen eines MEMS-basierten Infrarot-Emitters, was die Möglichkeit des Mikroheizens demonstriert;
- Fig. 15: eine Darstellung einer Platin-Nanoemitter-Spitze auf der Oberfläche einer gedruckten Platinschicht; und
- Fig. 16: einen Graph zur Verdeutlichung der Verbesserung der lonenemissionsströme durch eine kleine Anzahl von Nanoemitter-Spitzen.

In Fig. 1 ist eine insgesamt mit 12 bezeichnete Detektionsvorrichtung zur Detektion von Gasen oder Dämpfen dargestellt. Die Detektionsvorrichtung 12 weist als Hauptbestandteil ein Ionen-Mobilitätsspektrometer 14 mit einer lonisationsvorrichtung 16 und einer IMS-Driftröhre 18 auf.

Die Ionisationsvorrichtung 16 dient zum Ionisieren von Molekülen 20 eines Probengases 22. Sie weist eine Ionisationskammer als Reaktionsraum 24 mit einem Einlass 26 für das Probengas 22 und einer Ionisationsquelle 28 sowie eine Beleuchtungseinrichtung 30 zum Beleuchten der Ionisationsquelle 28 auf.

In Fig. 1 sind zwei Beispiele für Ionisationsquellen 28 dargestellt. Die Ionisationsquelle 28 ist hauptsächlich gebildet durch eine erste Elektrode 31, 32 aus einem bestimmten Festkörpermaterial. Die ersten Elektroden 31, 32 sind in MEMS-Technik gefertigt und weisen eine durch die Beleuchtungseinrichtung 30 beleuchtbare Festkörperoberfläche 34 auf.

In Fig. 1 sind weiter zwei konkrete Ausführungsbeispiele für die Beleuchtungseinrichtung 30 angedeutet. Demnach kann die Beleuchtungseinrichtung 30 eine Weißlichtquelle oder eine LED 36 und/oder einen Laser 38 aufweisen. Der Laser 38 kann ein Single-Frequenz-Laser oder ein abstimmbarer Laser sein.

Im Übergang zwischen der IMS-Driftröhre 18 und dem Reaktionsraum 24 der lonisationsvorrichtung 16 ist als Gegenelektrode 68 oder zweite Elektrode 40 ein Steuergitter 42 vorgesehen, das mit Öffnungen 44 zum Durchtritt der in der lonsationsvorrichtung 16 erzeugten Ionen 45, 46, 47 versehen ist.

Die IMS-Driftröhre 18 ist an ihrem dem Steuergitter 42 entgegengesetzten Ende mit einem Durchlassgitter 48 versehen. Durch Anlegen einer Spannung zwischen dem Steuergitter 42 und dem Durchlassgitter 48 wird in der IMS-Driftröhre 18 ein vorzugsweise homogenes elektrisches Feld 50 erzeugt. Die Länge L der IMS-Driftröhre 18 bestimmt den Driftraum 52.

Die IMS-Driftröhre 18 ist weiter mit Driftringen 54 zum Steuern der lonenbewegung und mit einer Sammelelektrode 56 am Ende des Driftraumes 52 versehen. Durch eine Öffnung 58 lässt sich Driftgas 60 zum Erzeugen eines Gegenstromes für die Ionen 45, 46, 47 in der IMS-Driftröhre 18 einleiten.

Die Sammelelektrode 56 ist über einen Verstärker 62 an eine Auswerteeinheit 64 angeschlossen, wo ein Mobilitätsspektrum 10 erzeugt werden kann. Hierzu wird der Ionenstrom, gemessen in Pikoampere, über die Zeit in Millisekunden aufgetragen. Über die unterschiedlichen Driftzeiten innerhalb des Driftgases 60 lässt sich die jeweilige Ion-Spezies 45, 46, 47 und damit der zu untersuchende Stoff des Probengases 22 identifizieren.

Zum Ionisieren in der Ionisationsvorrichtung 16 wird das Probengas 22 zu der Festkörperoberfläche 34 der Ionisationsquelle 28 geleitet. Beleuchtet man nun die Festkörperoberfläche 34 mittels der Beleuchtungseinrichtung 30, so werden die Moleküle 20 an der Festkörperoberfläche 34 durch photoinduzierten Elektronentransfer ionisiert.

Die dabei auftretenden physikalischen Vorgänge werden im Folgen näher erläutert.

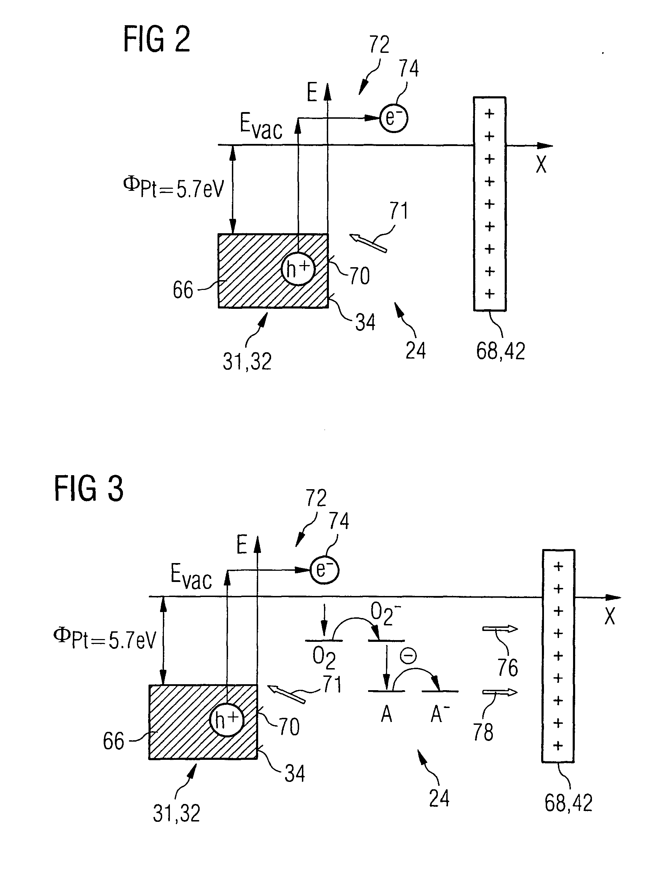

In einem ersten nicht erfindungsgemäßen Beispiel ist die erste Elektrode 31, 32 durch eine Platinelektrode 66 gebildet. Bei Fig. 2 wird der Einfachheit halber angenommen, dass diese Platinelektrode 66 einer ebenen Gegenelektrode 68 gegenüber liegt (in einer praktischen Ausgestaltung, wie sie in Fig. 1 dargestellt ist, könnte die Gegenelektrode 68 durch das Steuergitter 42 gebildet sein). Die Platin-elektrode 66 wird nun mit sichtbaren Licht oder UV-Licht belichtet (in der praktischen Ausgestaltung, gemäß Fig. 1 geschieht dies durch die Beleuchtungseinrichtung 30). Die Festkörperoberfläche 34 an der Platinelektrode 66 bildet eine Emitteroberfläche 70. Je nach den elektrischen Spannungszuständen zwischen der Emitteroberfläche 70 und der Gegenelektrode 68 und der Verfügbarkeit von Analytgasen in dem Reaktionsraum 24 zwischen den beiden Elektroden 66, 68 kann die Bildung positiver oder negativer Ionen beobachtet werden.

Der einfachste Fall ist in Fig. 2 dargestellt. Fig. 2 zeigt eine nicht erfindungsgemäße Prinzipdarstellung einer photoinduzierten Elektronenemission aus der Platin-elektrode 66 bei einem Betrieb in Vakuum. Hierbei wird ein Leitungselektron - Elektron 74 - innerhalb des Platin-Emitters - Platinelektrode 66 - auf eine Energie E größer als E_{vac} durch

Licht 71 photoangeregt, wobei E_{vac} die Vakuumenergie, d. h. diejenige Energie, oberhalb der ein Elektron die Platin-Oberfläche - Festkörperoberfläche 34 - verlassen kann, darstellt. In dem Fall, dass der Reaktionsraum 24 zwischen der Platinelektrode 66 und der mit positiver Spannung belegten Gegenelektrode 68 evakuiert worden ist, findet eine Elektronenemission 72 aus der Platinelektrode 66 statt. Mit h⁺ ist das durch den Entzug des Elektrons 74 gebildete Loch bezeichnet.

Fig. 3 stellt einen Fall dar, der näher an dem praktischen lonenmobilitätsspektrometer-Betrieb liegt. Fig. 3 zeigt eine nicht erfindungsgemäße Prinzipdarstellung einer negativen Ionenbildung, die auf eine photoinduzierte Elektronenemission 72 aus einer Platinelektrode 66 bei einem Betrieb in trockener Luft folgt. In diesem Fall ist also der Reaktionsraum 24 zwischen der Emitteroberfläche 70 und der Gegenelektrode 68 mit trockener Luft befüllt. Beleuchtet man nun die Emitterelektrode - hier die Platinelektrode 66 - mit Licht 71 mit der gleichen Wellenlänge wie zuvor bei Fig. 2, werden Elektronen 74 von der Festkörperoberfläche 34 der Platinelektrode 66 emittiert. Bei dem in Fig. 3 gezeigten Betrieb werden jedoch die emittierten Elektronen 74 schnell durch O₂-Moleküle unter Bildung von O₂⁻-Ionen gefangen. Anstelle eines Elektronenstroms wird man daher einen Strom von Reaktant-Ionen 76 beobachten.

Wenn nun Analyt-Moleküle A mit einer Elektronenaffinität Eₑₐ, die größer als diejenige von O₂ (Eₑₐ~0,448 eV) ist, vorhanden sind, werden diese negative A⁻-Ionen durch Ladungstransfer von O₂⁻-Ionen bilden. Es ist somit ein Strom von Analyt-Ionen 78 zu beobachten. Analyt-Gasmoleküle, die diese Bedingung erfüllen, sind explosive Materialien und andere Moleküle, die Atome und funktionelle Gruppen mit einer hohen Elektronenaffinität enthalten.

In dem Fall, dass die Gegenelektrode 68 als ein Maschengitter aufgebaut ist, wie dies bei dem Steuergitter 42 der Fall ist, können die negativen Reaktant-Ionen 76 und Analyt-Ionen 78 in die IMS-Driftröhre 18 injiziert werden und bezüglich ihrer Driftgeschwindigkeit und ihrer reduzierten Mobilität K₀ ähnlich wie im Fall eines radioaktiven Spektrometers analysiert werden. Ein wesentlicher Unterschied hierzu ist jedoch, dass bei dem Ionisationsprozess Radioaktivität streng vermieden wird.

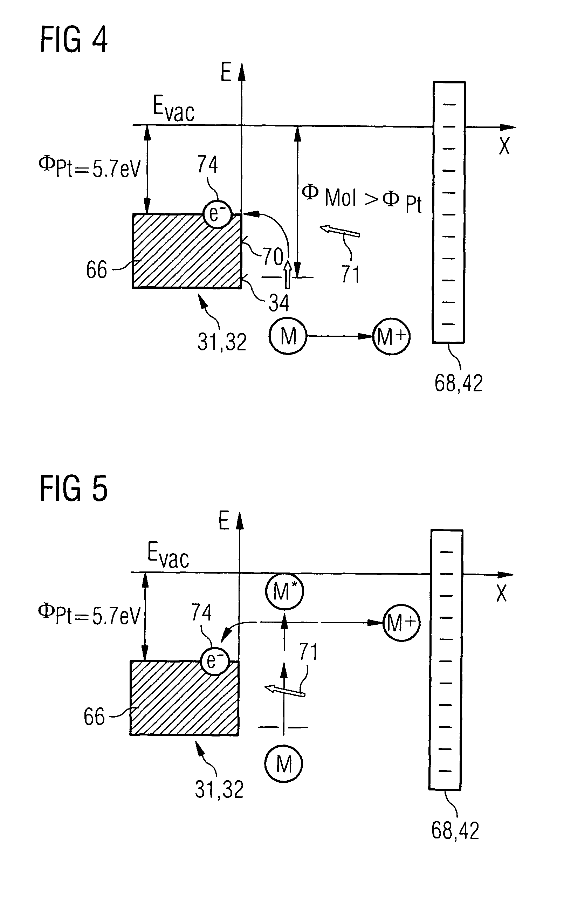

Mit der selben Anordnung wie in den Fig. 2 und 3 und in Fig. 1 dargestellt, jedoch mit einer negativ geladenen Gegenelektrode 68 kann auch positive Ionenemission beobachtet werden. Hier bestehen im Prinzip zwei Möglichkeiten, die im Folgenden anhand der Fig. 4 und 5 näher erläutert werden.

Sowohl Fig. 4 als auch Fig. 5 zeigen das nicht erfindungsgemäße Prinzip einer positiven Ionenemission aus einer belichteten Platin-Elektrode. Allgemeiner zeigen beide das Prinzip der photoinduzierten Oberflächenionisation.

In Fig. 4 wird ein Elektron 74 eines Moleküls M des Probengases 22 aus dem höchsten besetzten molekularen Orbital (HOMO) auf eine Energie oberhalb der Fermi-Energie der Platinelektrode 66 mittels Licht 71 photoangeregt. Durch Ladungstransfer des photoangeregten Elektrons 74 auf das Ferminiveau des Metalls wird ein positives Ion M⁺ gebildet, das von der Metalloberfläche - Festkörperoberfläche 34 - durch das elektrische Feld abgezogen werden kann, welches durch die negativ geladene Gegenelektrode 68 erzeugt wird.

Mögliche Lichtquellen für den in Fig. 4 dargestellten Vorgang sind unterschiedliche Typen von Weißlichtquellen, LEDs 36 oder Single-Frequenz Laser 38.

Die Bildung positiver Ionen kann auch unter den in Fig. 5 illustrierten Bedingungen beobachtet werden. In dem in Fig. 5 dargestellten Fall wird ein an der Festkörperoberfläche 34 adsorbiertes Molekül M aus dem Grundzustand in einen angeregten Zustand (bei M*) mittels Licht 71 photoangeregt, der energetisch höher als die Fermi-Energie der Platinelektrode 66 liegt. Das angeregte Elektron 74 kann dann auf die Fermi-Energie des Metalls unter Bildung eines positiven Ions M⁺ übergehen. Dieses positive Ion M⁺ kann von der Platinelektrode 66 durch die negativ geladene Gegenelektrode 68 extrahiert werden.

Während in dem in Fig. 4 dargestellten ersten Prozess zur Erzeugung positiver Ionen die Anregungs-Photonen-Energie einfach nur groß genug sein muss, um ein Valenzelektron aus dem HOMO-Niveau auf die Fermi-Energie in dem Metall zu heben, muss die Anregungs-Photonen-Energie in dem in Fig. 5 dargestellten zweiten Fall zur Erzeugung positiver Ionen zur Energiedifferenz zwischen dem molekül-spezifischen HOMO-Niveau und dem molekül-spezifischen LUMO-Niveau passen, wobei mit LUMO das niedrigste unbesetzte molekulare Orbital (Englisch: lowest unoccupied molecular orbital) gemeint ist. Das Anregungslicht 71 für den in Fig. 5 dargestellten zweiten Fall sollte daher aus einer monochromatischen Lichtquelle vorzugsweise einer abstimmbaren Laserquelle, stammen. Beispielsweise kann der Laser 38 wie in Fig. 1 dargestellt angeordnet sein.

Wiederum können in einem Fall, in dem die Gegenelektrode 68 mit Öffnungen 44 für die Ionen versehen ist, die positiven Ionen M⁺ in die IMS-Driftröhre 18 injiziert werden. Beispielsweise ist die Gegenelektrode 68 durch das Steuergitter 42 der Fig. 1 gebildet oder in sonstiger Form gitter- oder maschenähnlich ausgebildet. In der IMS-Driftröhre 18 können die positiven Ionen M⁺ bezüglich ihrer Driftgeschwindigkeit bzw. ihrer reduzierten Mobilität K₀ analysiert werden.

Im Folgenden werden mögliche Materialien für die erste Elektrode 31, 32 sowie die daran ausgebildete Festkörperoberfläche 34 näher diskutiert. In den nicht erfindungsgemäßen Beispielen gemäß den Fig. 2 bis 5 ist hierzu Platin eingesetzt.

Betrachtet man die Elektronenemission 72 gemäß dem Prozess in Fig. 2, so wären Metalle mit einer niedrigeren Austrittsarbeit Φ interessant, da dies die minimale Photonenergie reduzieren würden, die zur Anhebung eines Leitungselektrons ins Vakuumniveau notwendig ist. Es gibt eine kleine Anzahl von Edelmetallen, die niedrigere Austrittsarbeiten als Platin haben. Der Bereich von auf diese Weise zugänglichen Austrittsarbeiten ist jedoch recht begrenzt. Weniger edle Metalle tendieren dazu, bei einem Betrieb an Luft zu oxidieren und besitzen daher typischerweise n-Typ Halbleiter-Oberflächen mit tiefliegenden Leitungsbändern.

Betrachtet man die positive Ionenemission gemäß dem in Fig. 5 dargestellten Prozess, kann eine erste Abschätzung der benötigten Photonenergien durch Berücksichtigung der Vakuum-Ionisationsenergien von möglichen Analyt-Molekülen und der Position der Fermi-Energie E_{F}, _{Pt} der ersten Elektrode 31, 32 mit der Festkörperoberfläche 34 erhalten werden.

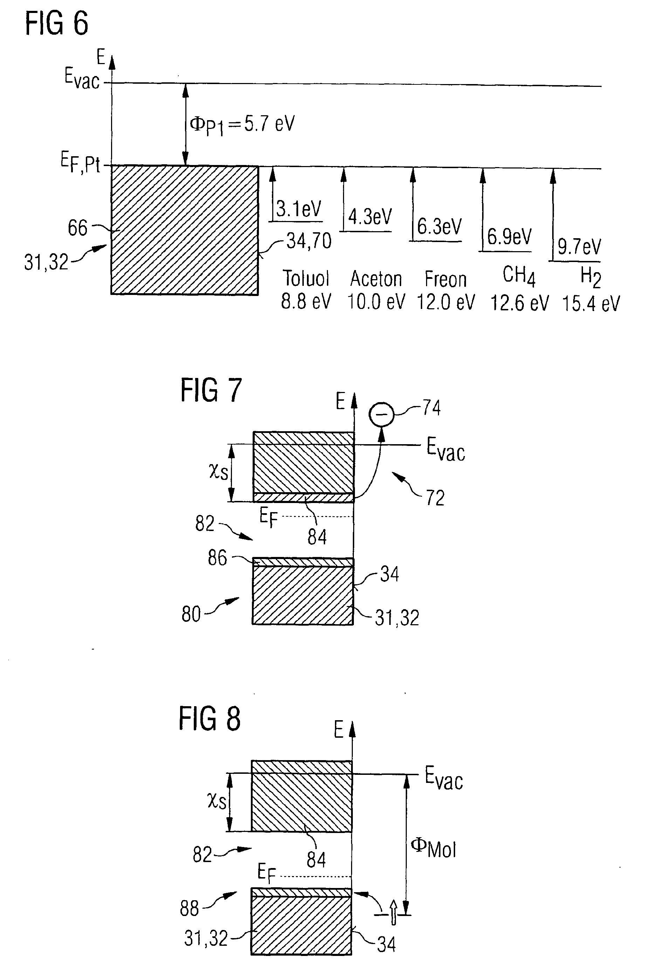

In Fig. 6 ist die positive Ionenemission von schwach gebundenen Adsorbaten für unterschiedliche zu untersuchende Stoffe am nicht erfindungsgemäßen Beispiel von Platin als Material für die erste Elektrode 31, 32 dargestellt. Die Adsorbate sind z. B. nur physikalisch adsorbiert (Physisorption). Allgemein wird bei den adsorbierten Molekülen die Festkörper-Ionisationsenergie relativ zu der Vakuumlonisationsenergie durch einen Betrag vermindert, welcher der Austrittsarbeit Φ des Festkörpermaterials der ersten Elektrode 31, 32 entspricht.

Die Daten von Fig. 6 zeigen, dass sichtbares Licht (Eₚₕ < 3,1 eV) ausreichend sein kann, um Elektronen von dem HOMO-Niveau der Analyte auf die Fermi-Energie von Platin anzuheben. Für geringer reaktive Moleküle mit entsprechend höheren Ionisationsenergien wären Metalle mit höherer Austrittsarbeit vorteilhaft. Dies ist jedoch zur Zeit nicht möglich, da Platin die höchste Austrittsarbeit aller derzeit bekannten Metalle hat. Jedoch können p-Typ-Halbleiter mit niedrig liegenden Valenzbändem bessere Materialien für die Oberflächenionisation bilden.

### Elektronen- und Ionenemission von Halbleiteroberflächen:

Berücksichtigt man die Tatsache, dass die meisten Metalle an Luft oxidieren und auf diese Weise Halbleiteroberflächen bilden, sollten die Prozesse der Elektronenemission aus einer n-Typ Halbleiteroberfläche (illustriert in Fig. 7) und der Oberflächenionisation an einer nicht erfindungsgemäßen p-Typ-Halbleiteroberfläche (illustriert in Fig. 8) beoachtet werden.

In Fig. 7 ist der n-Typ-Halbleiter 80 mit Bandlücke 82, Leitungsband 84, der Fermi-Energie E_{F}, der Vakuumenergie E_{vac} und dem Valenzband 86 dargestellt. Mit χₛ ist die Energiedifferenz zwischen der Bandlücke 82 und der Vakuumenergie E_{vac} angedeutet. In Fig. 8 ist der p-Typ-Halbleiter 88 ebenfalls mit Bandlücke 82, Valenzband 86 und den Energieniveaus E_{vac} und E_{F} dargestellt. χₛ bezeichnet den Energieabstand von der Bandkante des Leitungsbandes 84 zur Vakuumenergie E_{vac}. Weiter ist die Austrittsarbeit Φ_{Mol} für das zu ionisierende Molekül vergleichbar wie in Fig. 4 angedeutet.

Von der Darstellung in Fig. 7 ist ersichtlich, dass eine Elektronenemission 72 bei n-Typ-Halbleitern 80 mit hochliegenden Leitungsbändern 84 erleichtert ist. Aus Fig. 8 ist ersichtlich, dass eine Oberflächenionisation und damit Erzeugung von positiven Ionen unter Verwendung von nicht erfindungsgemäßen p-Typ-Halbleitern 88 mit besonders niedrig liegenden Valenzbändern 86 erleichtert ist.

Anhand dieser in Fig. 7 und 8 angedeuteten Erkenntnisse werden im Folgenden besonders geeignete Materialien für die Elektronenemission und die Oberflächenionisation näher erläutert.

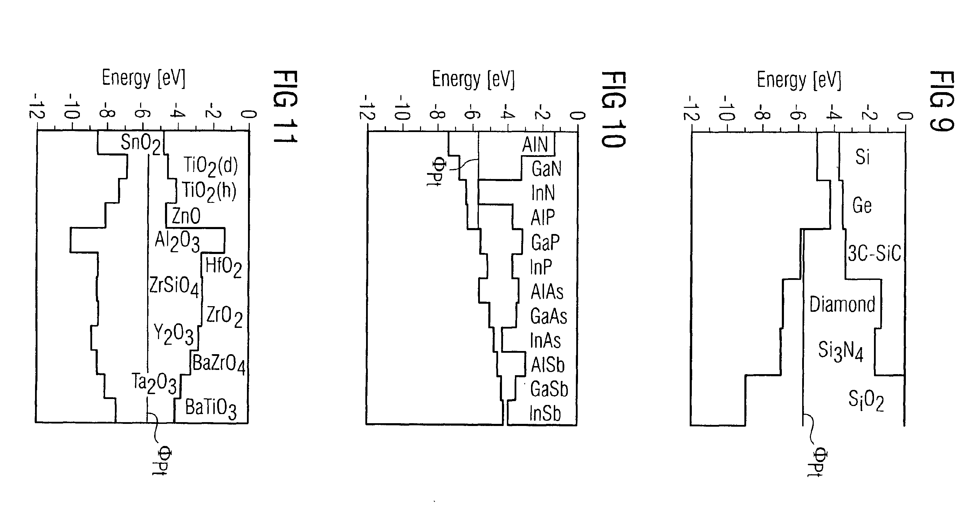

In der Welt der Halbleiter ist kristallines Silizium (Si) das Referenzmaterial. Silizium ist ein elementarer Halbleiter mit einer Bandlücke E_{g}~ 1,1 eV. In den Fig. 9, 10 und 11 sind die Bandlücken unterschiedlicher Halbleitermaterialien im Vergleich zur Austrittsarbeit Φₚₜ von Platin nebeneinander gestellt. Bei dem Energieniveau 0 ist jeweils die Vakuumenergie E_{vac} angesiedelt.

Fig. 9 zeigt, wie die Silizium-Bandlücke relativ zu der Vakuumenergie E_{vac} und der Platin-Austrittsarbeit Φₚₜ positioniert ist. Für eine Elektronenemission ist das Leitungsband von Silizium relativ tief, und für eine Oberflächenionisation ist das Valenzbandmaximum oberhalb der Austrittsarbeit Φₚₜ. Bulk-Si erscheint daher nicht besonders attraktiv als Festkörperoberfläche 34 und zwar weder als Elektronenemitter noch als Oberflächenionisationsquelle.

In Fig. 9 sind die Positionen der Bandkanten bei Gruppe-IV-Elementarhalbleitern in Bezug auf E_{vac} und der Platin-Austrittsarbeit Φₚₜ dargestellt. Zum Vergleich sind die Bandkanten von SiO₂ und von Si₃N₄, d. h. von zwei der am häufigsten in der Siliziumtechnologie verwendeten Isolatormaterialien gezeigt.

Wie aus dem Vergleich ersichtlich treffen die selben Argumente wie für Silizium auch auf Germanium (Ge) zu. Andererseits scheint kubisches SiC (3C-SiC) etwas attraktiver zur Verwendung als Oberflächenionenemitter zu sein. Andererseits sind sowohl Silizium als auch 3C-SiC unter Berücksichtigung des Umstandes problematisch, dass beide ein isolierendes Oxid (SiO₂) an ihren Oberflächen bilden.

Nicht erfindungsgemäßer p-Typ-Diamant ist dagegen als Oberflächenionisationsquelle gut verwendbar. Ein mögliches Problem kann sein, dass Diamant in CO₂ zerfällt, wenn er bei heißer Temperatur an Luft betrieben wird.

Ein n-Typ-Diamant könnte als Elektronenemitter sehr nützlich sein. Bisher ist das n-dotieren von Diamant jedoch noch nicht erfolgreich durchgeführt worden.

Fig. 10 zeigt die Positionen der Bandkanten in III-V-Halbleitermaterialien in bezug auf E_{vac} und der Austrittsarbeit von Platin Φₚₜ. Aufgrund seiner riesigen Bandlücke und seines hochliegenden Leitungsbandes erscheint AlN der am besten geeignete Kandidat unter den III-V-Materialien sowohl für die Elektronenemission als auch für die Oberflächenionisation zu sein. Derzeit ist eine Verwendung von AIN zur Oberflächenionisation schwierig, da bisher dieses Material noch nicht p-dotiert werden konnte. Jedoch ist eine n-Dotierung von AIN, beispielsweise mittels Silizium, möglich, was dieses Material sehr attraktiv als Elektronenemitter macht. Es erscheint möglich, dass mit diesem Material Elektronenemission bei Photonenenergien erzeugt werden kann, die nur 1,3 eV betragen. Daher können einfache Beleuchtungseinrichtungen eingesetzt werden. GaAs-basierte LEDs und Laser sollten bereits ausreichend sein. Ein potentieller Störfaktor könnte sein, dass AIN leicht eine Isolierschicht (Al₂O₃) an seiner Oberfläche bildet, wenn es der Umgebungsluft ausgesetzt wird.

Fig. 11 zeigt die Position der Bandkanten in einer Reihe von Metalloxidmaterialien in Relation zu E_{vac} und der Austrittsarbeit von Platin Φₚₜ. Alle gezeigten Metalloxid-Halbleiter weisen ähnlich zu III-Nitrid-Materialien, SiC und Diamant große Bandlücken auf.

Ein großer Vorteil bei der Verwendung von Metalloxiden bei der Elektronenemission und bei der Oberflächenionisation unter Umgebungsluftbedingungen ist, dass die Metalloxide - als Oxide - keiner weiteren Oxidation mehr unterworfen werden können. Als isolierendes Oxid erscheint Al₂O₃ ungeeignet, obwohl es von den Positionen seiner Valenzbandkante und seiner Leitungsbandkante her hoch attraktiv sowohl für die Elektronenemission als auch für die Oberflächenionisation wäre.

Die meisten anderen Metalloxid-Materialien sind von ihrer Natur her n-artig (Sn₃, BaTiO₃) und daher insbesondere als Elektronenemitter geeignet. Minimale Anregungs-Photonenenergien würden bei etwa 3-5 eV liegen.

Einige wenige Oxide sind von ihrer Natur her p-artig. Zu diesen gehören insbesondere NiO, Cr₂O₃, Chrom-Titan-Oxid (CTO) Mn₂O₃, Bi₂Sn₂O₇. Diese Materialien sind insbesondere als nicht erfindungsgemäße Oberflächenionenemitter geeignet.

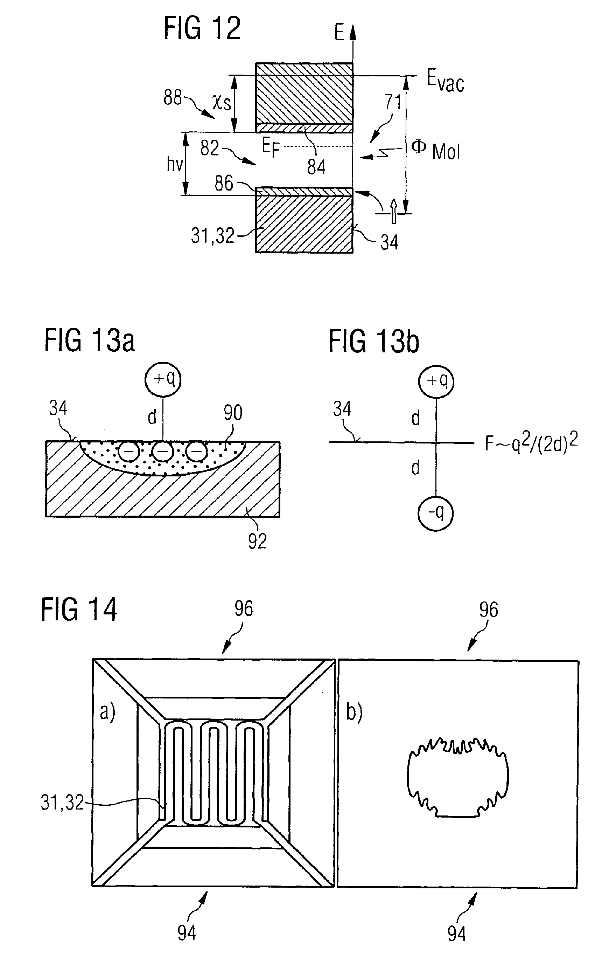

In Fig. 12 ist schematisch dargestellt wie auch mit n-Typ-Halbleitermaterialien ähnlich wie mit Pt in Fig. 4 eine Oberflächenionisation und eine Erzeugung positiver Ionen durchgeführt werden könnte. Dabei sind die gleichen Bezugszeichen wie in Fig. 7 verwendet. Durch eine induzierte Photonenergie hv lassen sich freie Löcher in dem Valenzband 86 erzeugen, welche dann zur Ionisation der adsorbierten Moleküle verwendbar sind.

Im Folgenden werden nun Techniken erläutert, wie die schwach gebundenen lonen von der Festkörperoberfläche 34 leicht gelöst werden können.

Zunächst wird anhand der Fig. 13a und 13b ein allgemeines Merkmal sowohl bei der Elektronenemission als auch bei der Ionenemission näher erläutert. Fig. 13a zeigt eine negative Ladungsverteilung 90 innerhalb eines leitenden Substrats 92, die während der Extraktion eines positiven Ions mit der Ladung +q aus der Festkörperoberfläche 34 induziert wird. Fig. 13b stellt die elektrostatische Anziehungskraft F in Abhängigkeit von der Ladung q und dem Abstand d der Ladung +q von der Festkörperoberfläche 34 anhand einer entsprechenden Spiegelbildladung -q dar. Wie dargestellt tendieren sowohl bei der Elektronenemission als auch bei der Ionenemission die Ladungen +q, -q, die den Festkörper verlassen, dazu, eine gleich große und entgegengesetzte Spiegelbildladung unterhalb der Festkörperoberfläche 34 zu induzieren. Dies gilt sowohl für Metalle als auch für Halbleitermaterialien.

Das Aufbrechen dieser elektrostatischen Bindung mit der Anziehungskraft F~q²/(2d)² benötigt Energie, die durch irgendwelche Einrichtungen bereit gestellt werden muss. Um diese Energie zum Brechen der elektrostatischen Bindung aufzubringen, gibt es wenigstens drei Prozesse, die alternativ oder kumuliert angewendet werden können:
- thermische Energie,
- das Erzeugen hoher elektrischer Felder und/oder
- Photonenanregung.

Thermische Energie kann durch eine Heizeinrichtung 96 erzielt werden. Hierzu wird das elektronenemittierende Material und/oder das ionenemittierende Material auf eine keramische Heizeinrichtung oder eine MEMS-Silizium-Heizeinrichtung aufgebracht. Solche Silizium-Heizeinrichtungen sind beispielsweise aus
[8] J. Spannhake, A. Helwig, G. Müller, G. Faglia, G. Sberveglieri, T. Doll, T. Wassner and M. Eickhoff, "SnO2:Sb - A new material for high-temperature MEMS heater applications: Performance and limitations", Sensors and Actuators B124, (2007), 421-428
bekannt.

Ein Beispiel ist in Fig. 14 gezeigt, wo ein MEMS-Infrarotemitter 94 mit einer elektrischen Energieleistung in der Größenordnung von 1 Watt auf Temperaturen in der Nähe von 1000°C erhitzt worden ist.

Fig. 14 zeigt den mit Mikrosystemtechnik hergestellten MEMS-Infrarotemitter 94 zur Darstellung der Möglichkeit des Mikroheizens. Durch Oberflächenbeschichtung mit einem der oben erläuterten für Elektronenemission oder Ionenemission geeigneten Materialien lässt sich die erste Elektrode 30, 31 zusammen mit einer Heizeinrichtung 96 aufbauen.

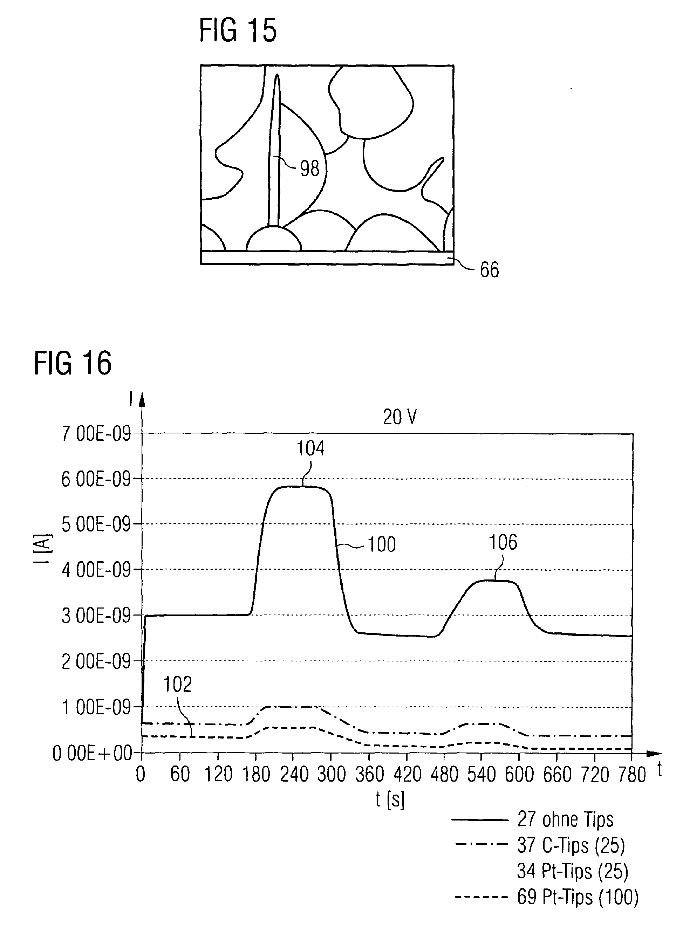

Ein zweiter und höchst effizienter Weg zum Aufbrechen der elektrostatischen Bindung lässt sich durch Ausbilden von elektrischen Leitungsspitzen und Kanten insbesondere mit Nanometer-Dimensionen erreichen. Beispielsweise werden Platin-Nanoemitter-Spitzen 98 wie in Fig. 15 gezeigt an der Platinelektrode 66 ausgebildet. Für nähere Einzelheiten wird auf das von dem Bundesministerium für Bildung und Forschung unterstützte Projekt "NACHOS" von A. Krenkow verwiesen. An den scharfen Ecken und Kanten und insbesondere an Spitzen im Nanometerbereich bilden sich sehr hohe elektrische Felder aus, die zum Aufbrechen der elektrostatischen Bindungen benutzbar sind.

Fig. 16 zeigt demgemäß Ionenströme, die von Platin-Festkörperoberflächen mit Nano-Emitter-Spitzen 98 (Kurve 100) und ohne Nano-Emitter-Spitzen (Kurve 102) gemessen worden sind. Es ist eine deutliche Verbesserung der Ionenströme durch bereits eine kleine Anzahl von Nano-Emitter-Spitzen 98 erzielbar. Der erste Peak 104 zeigt eine Messung mit Ethin und der zweite Peak mit H₂ an.

Bei der dritten Möglichkeit zum Aufbrechen der elektrostatischen Bindungen werden die adsorbierten Ionen mittels Photonenenergie herausgelöst, beispielsweise unter Verwendung von Laserlicht oder LED-Licht. Bei dieser Möglichkeit ist die Beleuchtungseinrichtung 30 von Fig. 1 entsprechend ausgestaltet.

**Bezugszeichenliste**

| | |
|---|---|
| 10 | Mobilitätsspektrum |
| 12 | Detektionsvorrichtung |
| 14 | Ionen-Mobilitäts-Spektrometer |
| 16 | Ionisationsvorrichtung |
| 18 | IMS-Driftröhre |
| 20 | Moleküle |
| 22 | Probengas |
| 24 | Reaktionsraum |
| 26 | Einlass |
| 28 | Ionisationsquelle |
| 30 | Beleuchtungseinrichtung |
| 31 | erste Elektrode |
| 32 | erste Elektrode |
| 34 | Festkörperoberfläche |
| 36 | LED |
| 38 | Laser |
| 40 | zweite Elektrode |
| 42 | Steuergitter |
| 44 | Öffnungen |
| 45 | Ionen |
| 46 | Ionen |
| 47 | Ionen |
| 48 | Durchlassgitter |
| 50 | elektrisches Feld |
| 52 | Driftraum |
| 54 | Driftringe |
| 56 | Sammelektrode |
| 58 | Öffnung für Driftgas |
| 60 | Driftgas |
| 62 | Verstärker |
| 64 | Auswerteeinheit |
| 66 | Platinelektrode |
| 68 | Gegenelektrode |
| 70 | Emitteroberfläche |
| 71 | Licht |
| 72 | Elektronenemission |
| 74 | Elektron |
| 76 | Strom von Reaktant-Ionen |
| 78 | Strom von Analyt-Ionen |
| 80 | n-Typ-Halbleiter |
| 82 | Bandlücke |
| 84 | Leitungsband |
| 86 | Valenzband |
| 88 | p-Typ-Halbleiter |
| 90 | Ladungsverteilung |
| 92 | leitendes Substrat |
| 94 | MEMS-Infrarot-Emitter |
| 96 | Heizeinrichtung |
| 98 | Nanoemitter-Spitzen |
| 100 | Ionen-Emissionsstrom aus Pt-Oberfläche mit Nanoemitter-Spitzen |
| 102 | Ionen-Emissionsstrom aus Pt-Oberfläche ohne Nanoemitter-Spitzen |
| 104 | erster Peak |
| 106 | zweiter Peak |
| L | Driftlänge |

## Patentansprüche

1. Ionisationsverfahren zur Ionisierung von zu untersuchenden gasförmigen oder dampfförmigen Stoffen (22), **gekennzeichnet durch** die Schritte:
● Vorsehen einer aus einem n-Typ Halbleitermaterial gebildeten Festkörperoberfläche (34);
● Leiten des zu untersuchenden Stoffes (22) zu der Festkörperoberfläche (34); und
● Beleuchten der Festkörperoberfläche (34) zum Emittieren von Elektronen, um so Moleküle des zu untersuchenden Stoffes (22) zu ionisieren.

2. Ionisationsverfahren nach Anspruch 1,
**gekennzeichnet durch** Anlegen einer gegenüber dem elektrischen Potential an der Festkörperoberfläche (34) positiven elektrischen Spannung an einer Gegenelektrode (68), um negative Ionen zu erzeugen oder
**gekennzeichnet durch** Anlegen einer gegenüber dem elektrischen Potential an der Festkörperoberfläche (34) negativen elektrischen Spannung an einer Gegenelektrode (68), um positive Ionen (45, 46, 47) zu erzeugen.

3. Ionisationsverfahren nach Anspruch 2,
**dadurch gekennzeichnet,**
**dass** die Beleuchtung und die Spannung derart ausgewählt werden, dass Elektronen (74) aus der Festköperoberfläche (34) emittiert werden, um mit den emittierten Elektronen (74) Ionen (76, 78) zu erzeugen oder dass die Festkörperoberfläche (34) derart beleuchtet wird, dass Elektronen (74) von an der Festkörperoberfläche (34) adsorbierten Molekülen des zu untersuchenden Stoffes von ihrem Grundzustand auf eine Energie angeregt werden, die größer als die Fermi-Energie des Festkörpermaterials an der Festkörperoberfläche (34) ist.

4. Ionisationsverfahren nach einem der voranstehenden Ansprüche,
**dadurch gekennzeichnet,**
**dass** mit den emittierten Elektronen (74) Sauerstoffionen aus Sauerstoffmolekülen aus der Atmosphäre erzeugt werden und mit den Sauerstoffionen Moleküle des zu untersuchenden Stoffes ionisiert werden, die eine größere Elektronenaffinität als Sauerstoffmoleküle haben.

5. Ionisationsverfahren nach einem der voranstehenden Ansprüche,
**dadurch gekennzeichnet,**
**dass** als Festkörperoberfläche (34) eine Oberfläche mit Nanomorphologie und/oder mit Nanostrukturen, insbesondere mit Nanodrähten, Nanogittern, Nanorippen und/oder Nanospitzen (98), verwendet wird und/oder dass die Festkörperoberfläche (34) beheizt wird.

6. Ionisationsverfahren nach einem der Ansprüche 1 bis 5,
**dadurch gekennzeichnet,**
**dass** als Festkörperoberfläche (34) eine Oberfläche aus n-dotiertem Halbleitermaterial mit einer Bandlücke größer als etwa 1,5 eV, insbesondere ausgewählt aus einer Gruppe, die III-Nitride und Metalloxidmaterialen enthält, verwendet wird.

7. Detektionsverfahren zur Detektion und/oder Identifikation von Gasen und/oder Dämpfen mittels Ionen-Mobilitätsspektrometrie,
**gekennzeichnet durch**
Ionisation der zu untersuchenden Stoffe (22) mittels eines Ionisationsverfahrens nach einem der voranstehenden Ansprüche.

8. Detektionsverfahren nach Anspruch 7,
**gekennzeichnet durch**
Identifikation der zu untersuchenden Stoffe (22) anhand der Photonenergie und/oder anhand einer Driftzeit der ionisierten Stoffe **durch** einen Driftraum (52) mit einem die Ionen (45, 46, 47) beeinflussenden Feld (50).

9. Ionisationsvorrichtung zur Ionisation von zu untersuchenden gasförmigen Stoffen mit einem Reaktionsraum (24), in den der zu untersuchende Stoff (22) geleitet werden kann, wobei der Reaktionsraum (24) eine erste Elektrode (31, 32) mit einer Festkörperoberfläche (34) enthält, die dem zu untersuchenden Stoff (22) unmittelbar ausgesetzt ist und wobei eine Beleuchtungseinrichtung (30) vorgesehen ist zur Beleuchtung der Festkörperoberfläche (34),
wobei die Festkörperoberfläche (34) zur Ionisierung von Molekülen des zu untersuchenden Stoffes durch photoinduzierten Elektronentransfer an der Festkörperoberfläche (34) aus einem n-Typ Halbleitermaterial gebildet ist.

10. Ionisationsvorrichtung nach Anspruch 9,
**dadurch gekennzeichnet,**
**dass** eine zweite Elektrode (40) vorgesehen ist, an die relativ zur ersten Elektrode (31, 32) mit der Festkörperoberfläche (34) eine positive oder negative Spannung anlegbar ist und/oder die mit Öffnungen (44) zum Durchtritt der Ionen (45, 46, 47) versehen ist.

11. Ionisationsvorrichtung nach einem der Ansprüche 9 oder 10,
**dadurch gekennzeichnet,**
**dass** die aus einem Halbleitermaterial gebildete Festkörperoberfläche (34) gebildet ist aus einem Material, das ausgewählt ist aus einer Gruppe, die n-dotierte Halbleitermaterialien mit einer Bandlücke größer als etwa 1,5 eV, insbesondere III-Nitride und Metalloxidmaterialien enthält und/oder
**dass** die aus einem Halbleitermaterial gebildete Festkörperoberfläche (34) eine Nanostrukturierung und/oder Nanomorphologie, insbesondere Nanodrähte, Nanogitter, Nanorippen und/oder Nanospitzen (98), aufweist.

12. Ionisationsvorrichtung nach einem der Ansprüche 9 bis 11,
**dadurch gekennzeichnet,**
**dass** die erste Elektrode (31, 32) und/oder deren belichtbare Festkörperoberfläche (34) und/oder die Ionisationsvorrichtung (16) in MEMS-Technik ausgebildet ist.

13. Ionisationsvorrichtung nach einem der Ansprüche 9 bis 12,
**gekennzeichnet durch** eine Heizeinrichtung (96) zum Heizen der ersten Elektrode (31, 32) und/oder deren belichtbaren Festkörperoberfläche (34).

14. Ionisationsvorrichtung nach einem der Ansprüche 9 bis 13,
**dadurch gekennzeichnet, dass** die Beleuchtungseinrichtung (30) eine Lichtquelle aufweist, die ausgewählt ist aus einer Gruppe, die Weißlichtquellen, LED's (36), GaAs-LEDs, Laser (38), Single-Frequenz-Laser und abstimmbare Laser umfasst.

15. Detektionsvorrichtung (12) zur Detektion von Gasen oder Dämpfen, mit einem Ionen-Mobilitäts-Spektrometer (14),
**dadurch gekennzeichnet,**
**dass** das Ionen-Mobilitäts-Spektrometer (14) eine Ionisationsvorrichtung (16) nach einem der Ansprüche 9 bis 14 aufweist.

## Claims

1. Ionization method for the ionization of gaseous or vaporous substances (22) to be analysed, **characterized by** the following steps:
● provision of a solid body surface (34) formed of an n-type semiconductor material;
● direction of the substance (22) to be analysed to the solid body surface (34); and
● illumination of the solid body surface (34) for the emission of electrons, in order to ionize molecules of the substance (22) to be analysed.

2. Ionization method according to Claim 1,
**characterized by** the application to a counter-electrode (68) of a positive electrical voltage, in relation to the electrical potential on the solid body surface (34), in order to generate negative ions, or
**characterized by** the application to a counter-electrode (68) of a negative electrical voltage, in relation to the electrical potential on the solid body surface (34), in order to generate positive ions (45, 46, 47).

3. Ionization method according to Claim 2,
**characterized in that**
the illumination and the voltage are selected such that electrons (74) are emitted from the solid body surface (34), in order to generate ions (76, 78) in combination with the emitted electrons (74), or such that the solid body surface (34) is illuminated such that electrons (74) from molecules of the substance to be analysed which are adsorbed on the solid body surface (34) are excited from their initial state to an energy level which exceeds the Fermi energy of the solid body material on the solid body surface (34).

4. Ionization method according to one of the preceding claims,
**characterized in that**
oxygen ions are generated from oxygen molecules from the atmosphere with the emitted electrons (74), and the oxygen ions are used to ionize molecules from the substance to be analysed which have a higher electron affinity than oxygen molecules.

5. Ionization method according to one of the preceding claims,
**characterized in that**
the solid body surface (34) used is a surface with nano-morphology and/or with nanostructures, in particular nano-wires, nano-grids, nano-ribs and/or nanospikes (98) and/or **in that** the solid body surface (34) is heated.

6. Ionization method according to one of Claims 1 to 5,
**characterized in that**
the solid body surface (34) used is a surface of an n-doped semiconductor material with a bandgap exceeding the order of 1.5 eV, which is in particular selected from a group which includes III-nitrides and metal oxide materials.

7. Detection method for the detection and/or identification of gases and/or vapours by means of ion mobility spectrometry,
**characterized by**
the ionization of substances (22) to be analysed by means of an ionization method according to one of the preceding claims.

8. Detection method according to Claim 7,
**characterized by**
the identification of substances (22) to be analysed by reference to the photon energy and/or by reference to a drift time of the ionized substances through a drift space (50) using a field (50) which exerts an influence upon the ions (45, 46, 47).

9. Ionization apparatus for the ionization of gaseous substances to be analysed, with a reaction space (24), into which the substance (22) to be analysed may be directed, wherein the reaction space (24) contains a first electrode (31, 32) with a solid body surface (34) which is directly exposed to the substance (22) to be analysed, and wherein an illumination device (30) is provided for the illumination of the solid body surface (34),
wherein the solid body surface (34) for the ionization of molecules in the substance to be analysed by photo-induced electron transfer on the solid body surface (34) is formed of an n-type semiconductor material.

10. Ionization apparatus according to Claim 9,
**characterized in that**
a second electrode (40) is provided, to which a positive or negative voltage may be applied in relation to the first electrode (31, 32) with the solid body surface (34) and/or which is provided with openings (44) for the admission of ions (45, 46, 47).

11. Ionization apparatus according to one of Claims 9 or 10,
**characterized in that**
the solid body surface (34) formed of a semiconductor material is formed of a material which is selected from a group which includes n-doped semiconductor materials with a bandgap exceeding the order of 1.5 eV, in particular III-nitrides and metal oxide materials, and/or
**in that** the solid body surface (34) formed of a semiconductor material is provided with a nanostructure and/or nano-morphology, in particular nano-wires, nano-grids, nano-ribs and/or nanospikes (98).

12. Ionization apparatus according to one of Claims 9 to 11,
**characterized in that**
the first electrode (31, 32) and/or the light-receiving solid body surface (34) thereof and/or the ionization apparatus (16) is configured using MEMS technology.

13. Ionization apparatus according to one of Claims 9 to 12,
**characterized by** a heating device (96) for the heating of the first electrode (31, 32) and/or the light-receiving solid body surface (34) thereof.

14. Ionization apparatus according to one of Claims 9 to 13,
**characterized in that** the illumination device (30) is provided with a light source which is selected from a group which includes white light sources, LEDs (36), GaAs-LEDs, lasers (38), single-frequency lasers and variable lasers.

15. Detection apparatus (12) for the detection of gases or vapours, with an ion mobility spectrometer (14),
**characterized in that**
the ion mobility spectrometer (14) is provided with an ionization apparatus (16) according to one of Claims 9 to 14.

## Revendications

1. Procédé d'ionisation pour ioniser pour leur analyse, des matières gazeuses ou à l'état de vapeur (22),
**caractérisé par** les étapes suivantes consistant à :
- utiliser une surface supérieure (34) de corps solide, formée en une matière semi-conductrice de type (n),
- conduire la matière à analyser (22) vers la surface supérieure du corps solide (34), et
- éclairer la surface supérieure du corps solide (34) pour émettre des électrons et ioniser ainsi les molécules de la matière à analyser (22).

2. Procédé d'ionisation selon la revendication 1,
**caractérisé en ce qu'**
on applique à une contre-électrode (68), une tension électrique positive par rapport au potentiel électrique de la surface supérieure de corps solide (34) pour générer des ions négatifs, ou
**caractérisé en ce qu'**
on applique à une contre-électrode (68), une tension électrique négative par rapport au potentiel électrique de la surface supérieure de corps solide (34) pour générer des ions positifs (45, 46, 47).

3. Procédé d'ionisation selon la revendication 2,
**caractérisé en ce qu'**
on sélectionne l'éclairage et la tension pour que les électrons (74) soient émis par la surface supérieure de corps solide (34) pour générer des ions (76, 78) avec les électrons émis (74) ou **en ce qu'**on éclaire la surface supérieure de corps solide (34) pour que les électrons (74) des molécules adsorbées à la surface supérieure (34) par la matière à analyser, soient excités à partir de leur état de base à une énergie supérieure à l'énergie de Fermi de la matière du corps solide à sa surface supérieure (34).

4. Procédé d'ionisation selon l'une des revendications précédentes,
**caractérisé en ce qu'**
avec les électrons émis (74) on génère des ions oxygène à partir des molécules d'oxygène de l'atmosphère et on ionise avec les ions d'oxygène, les molécules de la matière à analyser qui ont une plus grande affinité électronique que les molécules d'oxygène.

5. Procédé d'ionisation selon l'une des revendications précédentes,
**caractérisé en ce que**
comme surface supérieure de corps solide (34), on utilise une surface supérieure avec une nano-morphologie et/ou des nanostructures, notamment des nano-fils, des nano-grilles, des nano-nervures et/ou des nano-pointes (98) et/ou on chauffe la surface supérieure de corps solide (34).

6. Procédé d'ionisation selon l'une des revendications 1 à 5,
**caractérisé en ce que**
comme surface supérieure de corps solide (34), on sélectionne la surface supérieure d'une matière semi-conductrice à dopage (n) avec un intervalle de bande supérieur à environ 1,5 eV, notamment dans un groupe qui contient les nitrures III et des oxydes métalliques.

7. Procédé de détection pour détecter et/ou identifier des gaz ou des vapeurs par spectroscopie de mobilité ionique,
procédé **caractérisé par**
ionisation de la matière (22) à analyser à l'aide d'un procédé d'ionisation selon l'une des revendications précédentes.

8. Procédé de détection selon la revendication 7,
**caractérisé en ce que**
par l'identification de la matière à analyser (22) à l'aide de la photo énergie et/ou à l'aide du temps de dérive des matières ionisées à travers un espace de dérive (52) avec un champ (50) influençant les ions (45, 46, 47).

9. Dispositif d'ionisation pour ioniser des matières gazeuses à analyser avec une chambre de réaction (24) dans laquelle on conduit la matière à analyser (22), la chambre de réaction (24) ayant une première électrode (31, 32) avec une surface supérieure de corps solide (34) exposée directement à la matière à analyser (22) et une installation d'éclairage (30) pour éclairer la surface supérieure de corps solide (34),
cette surface supérieure (34) étant formée en une matière semi-conductrice de type (n) pour ioniser des molécules de la matière à analyser par un transfert d'électrons photo-induit à la surface supérieure de corps solide (34).

10. Dispositif d'ionisation selon la revendication 9,
**caractérisé par**
une seconde électrode (40) à laquelle on applique une tension positive ou négative par rapport à la première électrode (31, 32) avec la surface supérieure de corps solide (34) et/ou qui comporte des ouverture (44) pour le passage des ions (45, 46, 47).

11. Dispositif d'ionisation selon l'une des revendications 9 à 10,
**caractérisé en ce que**
la surface supérieure de corps solide (34) en matière semi-conductrice est réalisée en une matière choisie dans un groupe qui comprend les matières semi-conductrices à dopage (n) avec un intervalle de bande supérieur à environ 1,5 eV notamment les nitrures III et les oxydes métalliques et/ou
la surface supérieure de corps solide (34) formée avec la matière semi-conductrice a une nanostructure et/ou une nano-morphologie et en particulier des nano-fils, des nano-grilles, des nano-nervures et/ou des nano-pointes (98).

12. Dispositif d'ionisation selon l'une des revendications 9 à 11,
**caractérisé en ce que**
la première électrode (31, 32) et/ou sa surface supérieure de corps solide (34) éclairée et/ou le dispositif d'ionisation (16) sont réalisés en technique MEMS.

13. Dispositif d'ionisation selon l'une des revendications 9 à 12,
**caractérisé par**
une installation de chauffage (96) pour chauffer la première électrode (31, 32) et/ou sa surface supérieure de corps solide (34) éclairée.

14. Dispositif d'ionisation selon l'une des revendications 9 à 13,
**caractérisé en ce que**
l'installation d'éclairage (30) a une source lumineuse choisie dans un groupe comprenant les sources de lumière blanche, les diodes LED (36), les diodes LED GaAs, les lasers (38), les lasers mono-fréquence et les lasers accordés.

15. Dispositif de détection (12) pour détecter des gaz ou des vapeurs à l'aide d'un spectromètre de mobilité ionique (14),
**caractérisé en ce que**
le spectromètre de mobilité ionique (14) comporte un dispositif d'ionisation (16) selon l'une des revendications 9 à 14.
